# EUROPÄISCHE PATENTSCHRIFT

(11) **EP 3 957 801 B1**
(45) Veröffentlichungstag und Bekanntmachung des Hinweises auf die Patenterteilung: **29.01.2025**
(21) Anmeldenummer: 21188264.2
(22) Anmeldetag: 28.07.2021
(51) Int. Cl.: E03D 11/14, E03D 11/13, H02G 3/04, H02G 3/38, E03D 9/08

(54) **VERBINDUNGSVORRICHTUNG ZWISCHEN EINEM UNTERPUTZWASSERKASTEN UND EINER SPÜLE**
CONNECTION DEVICE BETWEEN A FLUSH-MOUNTED WATER COLLECTOR AND A SINK
DISPOSITIF DE RACCORDEMENT ENTRE UN RÉSERVOIR DE CHASSE ENCASTRÉ ET UN ÉVIER

(30) Priorität: 29.07.2020 CN 202021536839 U
(43) Veröffentlichungstag der Anmeldung: 23.02.2022
(73) Patentinhaber: Oceanwell (Xiamen) Industrial Co., Ltd., Xiamen, Fujian (CN)
(72) Erfinder: CHEN, Ganming, Haicang Dist., Xiamen (CN); PENG, Dong, Haicang Dist., Xiamen (CN); YU, Xingyi, Haicang Dist., Xiamen (CN)
(74) Vertreter: Rätsch, Caroline

(56) Entgegenhaltungen:
- EP-A1- 2 568 089
- DE-A1- 102013 203 941
- US-A1- 2018 216 328

## Beschreibung

### Technisches Gebiet

Die vorliegende Erfindung bezieht sich auf eine Verbindungsvorrichtung zwischen einem Unterputzwasserkasten und einer Spültoilette. Solche Verbindungsvorrichtungen sind zum Beispiel aus den Dokumenten DE 10 2013 203941 A1 und EP 2 568 089 A1 bereits bekannt.

### Stand der Technik

Intelligente Toiletten kommen immer häufiger zum Einsatz. Dabei gilt die weibliche und die hintere Reinigung als eine der wichtigsten Funktionen. Daher benötigt die Toilette zusätzlich zur Toilettenbeckenspülleitung auch einen Wasserleitungsanschluss, um eine Wasserquelle für die weibliche und die hintere Reinigung bereitzustellen. Intelligente Toiletten können in Verbindung mit einer induktiven Betätigungsplatte zur Spülung des Unterputzwasserkastens stehen, um beispielsweise auch das Öffnen und Schließen des Klodeckels zu steuern. Hierzu sind Kabelverbindungen zwischen der Toilette und der induktiven Betätigungsplatte zur Spülung vorgesehen.

Bei bekannten Verbindungsvorrichtungen sind die Wasserleitung und die Verdrahtung bereits vor dem Einbau der Toilette vorverlegt, wobei die Anschlüsse für die Wasser- und Kabelleitungen direkt hinter der Einbauposition der Toilette angeordnet sind. Da hinter der Einbauposition der Toilette jedoch häufig die Keramikwand für die Abwasserableitung der Toilette angeordnet ist, steht nicht viel Platz für die Rohr- und Drahtverbindung zur Verfügung. Bei der Umrüstung einer Spültoilette ohne intelligente Funktion, d.h. ohne weibliche und hintere Reinigung, zu einer intelligenten Spültoilette kann die Verlegung der Wasser- und Kabelleitungen zum Problem werden, das tatsächlich nur durch eine offene Leitungsbauweise gelöst werden kann.

Die bestehenden Verbindungsvorrichtungen sind also bezüglich der Rohrverlegung und Verdrahtung nicht anwenderfreundlich genug.

### Offenbarung der Erfindung

Die vorliegende Erfindung stellt eine Verbindungsvorrichtung zwischen einem Unterputzwasserkasten und einer Spültoilette zur Verfügung, mit der die im Stand der Technik bestehenden Mängel überwunden werden können.

Zur Lösung der vorstehend genannten Aufgabe weist die Verbindungsvorrichtung zwischen einem Unterputzwasserkasten und einer Spültoilette einen Befestigungsrahmen mit zwei vertikal angeordneten Säulen, die links und rechts angeordnet sind, und eine Montageplatte zur horizontalen Verbindung der linken und der rechten Säule auf, wobei auf der Montageplatte Montagebohrungen für eine Montage der Spültoilette vorgesehen sind. Die Verbindungsvorrichtung weist ferner ein Spülrohr zum Verbinden des Unterputzwasserkastens mit einer Spülleitung der Spültoilette, ein Abwasserrohr zum Verbinden mit einer Abwasserableitung der Spültoilette sowie ein Führungsrohr auf, das als Hohlrohr ausgebildet ist und dessen Innenraum für die Verlegung von Kabel- oder Wasserleitungen verwendet wird, wobei sich eine Eintrittsöffnung des Abwasserrohrs unterhalb der Montageplatte befindet, wobei das obere Ende des Führungsrohrs mit dem Unterputzwasserkasten kommuniziert, und wobei das untere Ende des Führungsrohrs unterhalb der Eintrittsöffnung des Abwasserrohrs und abweichend von der Mittelachse angeordnet ist, durch welche der Befestigungsrahmen links und rechts halbiert wird. Ferner ist das Führungsrohr hinter der Montageplatte angeordnet und der Befestigungsrahmen weist ferner einen Verstärkungssteg auf, mit dem die linke und rechte Säule horizontal miteinander verbunden sind, wobei der Verstärkungssteg unterhalb der Eintrittsöffnung des Abwasserrohrs angeordnet ist. Das Führungsrohr ist unten gegabelt, um zwei untere Enden zu bilden, und das Führungsrohr ist nahe seinem unteren Ende nach vorne gebogen, so dass die untere Stirnfläche nach vorne gerichtet ist und der nach vorne gebogene Abschnitt des Führungsrohrs unterhalb des Verstärkungsstegs eingerastet ist.

Die vorliegende technische Lösung weist folgende Vorteile gegenüber dem Stand der Technik auf:
Durch Verwendung des Führungsrohrs können die Kabel- bzw. Wasserleitungen separat verlegt werden. Das untere Ende des Führungsrohrs ist von der Mittelachse des Befestigungsrahmens abweichend und ferner unterhalb der Eintrittsöffnung des Abwasserrohrs angeordnet, sodass es nicht durch die Abwasserableitung der Toilette tangiert wird. Hierdurch erfolgt die Installation von Drahtleitungen und Wasserrohren einfacher und schneller. Auch wenn eine herkömmliche Toilette umgerüstet oder durch eine neue intelligente Toilette ersetzt wird, können Drahtleitungen und Wasserrohre durch das Führungsrohr mit dem Unterputzspülkasten bzw. der induktiven Betätigungsplatte zur Spülung verbunden werden. Damit wird das technische Problem, dass bei der Verkabelung und Rohrverlegung des Unterputzwasserkastens häufig Schwierigkeiten auftreten, gelöst.

### Kurze Beschreibung der Zeichnungen

Im Folgenden wird die vorliegende Erfindung in Verbindung mit den beigefügten Zeichnungen anhand eines Ausführungsbeispiels näher beschrieben.
Fig. 1 zeigt eine schematische Darstellung des Unterputzwasserkastens und der Verbindungsvorrichtung.
Fig. 2 zeigt eine schematische perspektivische Darstellung eines Führungsrohrs der Verbindungsvorrichtung (am unteren Ende nicht gebohrt).
Fig. 3 zeigt eine schematische Explosionsansicht des Führungsrohrs der Verbindungsvorrichtung (am unteren Ende nicht gebohrt).

### Ausführungsbeispiel der Erfindung

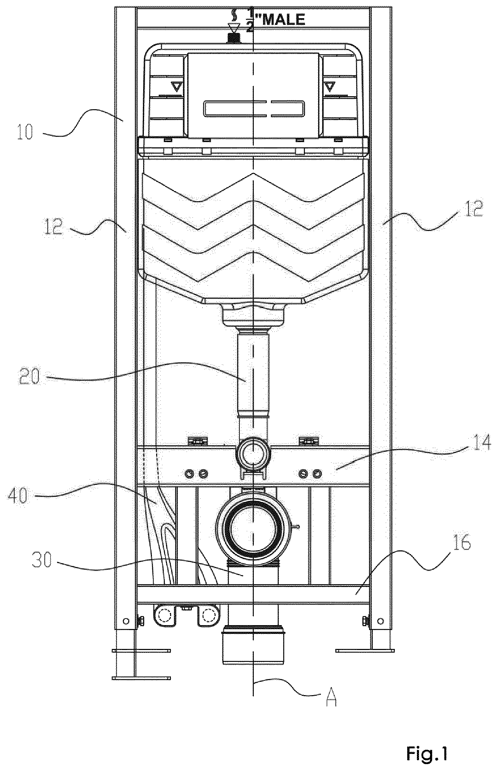

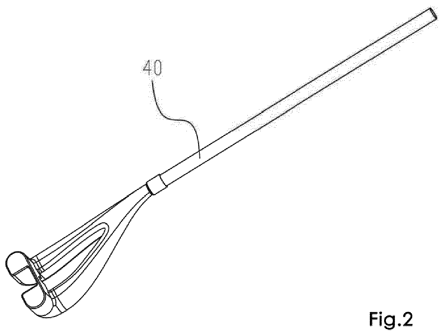

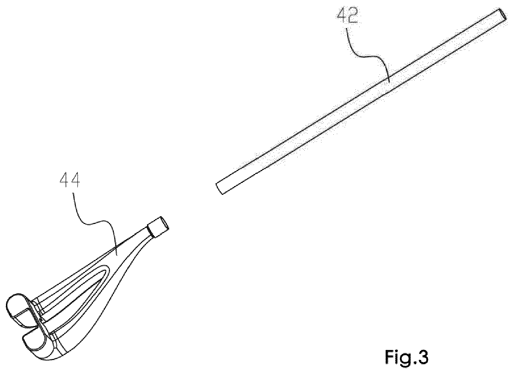

Fig. 1 bis 3 zeigen eine Verbindungsvorrichtung zwischen einem Unterputzwasserkasten und einer Spültoilette, wobei die Verbindungsvorrichtung zum Verbinden des Unterputzwasserkastens mit der Spültoilette dient und für den Gebrauch in eine Wand eingebettet wird. Die Spültoilette sieht aus wie an eine Wand angebaut und verfügt über eine Spülleitung und eine Abwasserableitung. Die Spülleitung dient als die Zulaufleitung für Toilettenspülwasser, während die Abwasserableitung als Abflussleitung für Abwasser fungiert. Die Verbindungsvorrichtung umfasst einen Befestigungsrahmen 10, ein Spülrohr 20, ein Abwasserrohr 30 und ein Führungsrohr 40.

Der Befestigungsrahmen 10 weist zwei vertikale Säulen 12, die auf der linken Seite und auf der rechten Seite angeordnet sind, sowie eine Montageplatte 14 auf, über die die linke und die rechte Säule horizontal verbunden sind. Auf der Montageplatte 14 sind Montagebohrungen für eine Montage der Spültoilette ausgebildet. Die Montagebohrungen sind auf den beiden Seiten der Mittelachse A angeordnet, durch die der Befestigungsrahmen links und rechts halbiert wird. Die Montageplatte 14 liegt auf einer Höhe unterhalb einer Mittelachse, durch die der Befestigungsrahmen oben und unten halbiert ist.

Das Spülrohr 20 dient zur Verbindung des Unterputzwasserkastens mit der Spülleitung der Spültoilette, wobei das obere Ende eine Eintrittsöffnung bildet und mit dem Unterputzwasserkasten verbunden ist. Das untere Ende stützt sich auf der Montageplatte 14 ab, wobei die Öffnung am unteren Ende als Austrittsöffnung fungiert und zur Verbindung mit der Spülleitung der Spültoilette nach vorne gerichtet ist. Bei dem vorliegenden Ausführungsbeispiel liegt das Spülrohr 20 auf der Mittelachse A und ist L-förmig ausgebildet.

Das Abwasserrohr 30 wird zum Verbinden mit der Abwasserableitung der Spültoilette verwendet, wobei dessen oberes Ende als Eintrittsöffnung und dessen unteres Ende als Austrittsöffnung dient und wobei die Eintrittsöffnung des Abwasserrohrs unterhalb der Montageplatte 14 angeordnet ist. Bei dem vorliegenden Ausführungsbeispiel liegt das Abwasserrohr 30 auf der Mittelachse A und ist L-förmig ausgebildet.

Das Führungsrohr 40 ist als Hohlrohr ausgebildet, dessen Innenraum für die Verlegung von Leitungen (beispielsweise Drähte) oder Wasserrohren vorgesehen ist, wobei das obere Ende des Führungsrohrs 40 mit dem Unterputzwasserkasten kommuniziert, und wobei das untere Ende des Führungsrohrs 40 unterhalb der Eintrittsöffnung des Abwasserrohrs 30 und abweichend von der Mittelachse A angeordnet ist. Da die induktive Betätigungsplatte zur Spülung auf der Oberseite des Unterputzwasserkastens vorgesehen ist, können die Wasserleitungen zur weiblichen und hinteren Reinigung der Spültoilette sowie die Datenkabel zur Steuerung der intelligenten Spülung durch das Führungsrohr 40 verlaufen.

Vorzugsweise ist es vorgesehen, dass das obere Ende des Führungsrohrs 40 offen ausgebildet ist und eine Öffnung bildet, und dass das untere Ende geschlossen ausgebildet ist und zum Einbau von Kabel- oder Wasserleitungen gebohrt wird. Das untere Ende des Führungsrohrs 40 ist zunächst verschlossen, um Verstopfungen während Bauarbeiten zu verhindern.

Vorzugsweise ist vorgesehen, dass das Bohrloch am unteren Ende des Führungsrohrs 40 als Einlass und die Öffnung am oberen Ende als Auslass verwendet wird. Die Kabel- oder Wasserleitungen werden also durch das untere Ende des Führungsrohrs 40 eingeführt und verlaufen dann in dem Innenraum des Führungsrohrs nach oben und können schließlich an den Unterputzwasserkasten angeschlossen werden. Da die Verlegung von Draht- und Rohrleitungen von unten erfolgt, werden die Bau- und Installationsarbeiten erleichtert.

Erfindungsgemäß ist das Führungsrohr 40 unten gegabelt, um zwei untere Enden zu bilden, wie in der Zeichnung dargestellt. Die beiden unteren Enden werden getrennt gebohrt, und zwar eines für die Verdrahtung und das andere für die Rohrverlegung, um somit eine vereinfachte Anordnung zu erreichen.

Erfindungsgemäß ist vorgesehen, dass das Führungsrohr 40 hinter der Montageplatte 14 angeordnet und nahe seinem unteren Ende nach vorne gebogen ist, so dass die untere Stirnfläche nach vorne gerichtet ist. Da sich das Führungsrohr auf der Rückseite der Montageplatte befindet, werden weder andere Bauteile beeinträchtigt, noch ist es erforderlich, die Dicke des Befestigungsrahmens zu vergrößern.

Vorzugsweise besteht das Führungsrohr 40 aus zwei Teilen, nämlich einem geraden Rohrabschnitt 42 und einem gebogenen Rohrabschnitt 44, die beide miteinander in Steckverbindung stehen, wobei der gebogene Rohrabschnitt 44 an seinem unteren Abschnitt als V-förmige Verzweigung ausgebildet ist, so dass dort zwei untere Enden entstehen. Das Führungsrohr ist ein Kunststoffteil, das mit einer zweiteiligen Form die Herstellung erleichtert.

Erfindungsgemäß umfasst der Befestigungsrahmen 10 ferner einen Verstärkungssteg 16, mit dem die linke und die rechte Säule horizontal miteinander verbunden sind. Der Verstärkungssteg 16 ist unterhalb der Eintrittsöffnung des Abwasserrohrs 30 angeordnet, wobei der nach vorne gebogene Abschnitt des Führungsrohrs 40 unterhalb des Verstärkungsstegs 16 eingerastet ist. Bei dem vorliegenden Ausführungsbeispiel ist das Führungsrohr 40 mit dem Verstärkungssteg 16 fest miteinander verbunden. Durch den Verstärkungssteg 16 wird nicht nur die Festigkeit des Befestigungsrahmens erhöht, sondern das Führungsrohr ferner in seiner Position gesichert und somit verhindert, dass es sich lockert.

Vorzugsweise beträgt der Abstand zwischen dem unteren Endabschnitt des Führungsrohrs 40 und der Mittelachse A weniger als 190 mm. Der untere Endabschnitt des Führungsrohrs kann in einem Bereich, der sich von der Seite des Abwasserrohrs nach außen bis zu einer im Abstand von 190 mm zur Mittelachse befindlichen Stelle erstreckt, angeordnet werden, sodass große Arbeitsräume hinter der Toilette geschaffen werden und die Bauarbeiten erleichtern.

Vorzugsweise ist die Höhe des unteren Endes des Führungsrohrs 40 geringer als die Höhe der Unterseite der am Befestigungsrahmen 10 montierten Spültoilette. Dies bedeutet, dass sich die Öffnung am unteren Ende des Führungsrohrs nach Einbau der Spültoilette unterhalb der Bodenfläche der Toilette befindet. Die Toilette verdeckt tatsächlich nicht die Öffnung am unteren Ende des Führungsrohrs, was es erleichtert, die Drähte und Rohrleitungen von unten zu verlegen.

Die vorstehenden Ausführungen dienen nur als bevorzugte Ausführungsbeispiele der vorliegenden Erfindung.

## Patentansprüche

1. Verbindungsvorrichtung zwischen einem Unterputzwasserkasten und einer Spültoilette, mit:
einem Befestigungsrahmen (10), aufweisend zwei vertikal angeordnete Säulen (12), die links und rechts angeordnet sind;
einer Montageplatte (14) zur horizontalen Verbindung der linken und der rechten Säule (12), wobei auf der Montageplatte (14) Montagebohrungen für eine Montage der Spültoilette vorgesehen sind;
einem Spülrohr (20) zum Verbinden des Unterputzwasserkastens mit einer Spülleitung der Spültoilette;
einem Abwasserrohr (30) zum Verbinden mit einer Abwasserableitung der Spültoilette, wobei sich eine Eintrittsöffnung des Abwasserrohrs (30) unterhalb der Montageplatte (14) befindet,
einem Führungsrohr (40), das als Hohlrohr ausgebildet ist und dessen Innenraum für die Verlegung von Kabel- oder Wasserleitungen verwendet wird,
wobei das obere Ende des Führungsrohrs (40) mit dem Unterputzwasserkasten kommuniziert,
wobei das untere Ende des Führungsrohrs (40) abweichend von der Mittelachse (A) angeordnet ist, durch welche der Befestigungsrahmen (10) links und rechts halbiert wird,
wobei das Führungsrohr (40) hinter der Montageplatte (14) angeordnet ist,
wobei der Befestigungsrahmen (10) ferner einen Verstärkungssteg (16) aufweist, mit dem die linke und rechte Säule (12) horizontal miteinander verbunden sind, wobei der Verstärkungssteg (16) unterhalb der Eintrittsöffnung des Abwasserrohrs (30) angeordnet ist,
wobei das Führungsrohr (40) unten gegabelt ist, um zwei untere Enden zu bilden, und
wobei das Führungsrohr (40) nahe seinem unteren Ende nach vorne gebogen ist, so dass die untere Stirnfläche nach vorne gerichtet ist,
**dadurch gekennzeichnet,**
**dass** das untere Ende des Führungsrohrs (40) unterhalb der Eintrittsöffnung des Abwasserrohrs (30) angeordnet ist, und
**dass** der nach vorne gebogene Abschnitt des Führungsrohrs (40) unterhalb des Verstärkungsstegs (16) eingerastet ist.

2. Verbindungsvorrichtung zwischen einem Unterputzwasserkasten und einer Spültoilette nach Anspruch 1, **dadurch gekennzeichnet, dass** das obere Ende des Führungsrohrs (40) offen ausgebildet ist und eine Öffnung bildet, und dass das untere Ende geschlossen ausgebildet ist und beim Einbau von Kabel- oder Wasserleitungen gebohrt wird.

3. Verbindungsvorrichtung zwischen einem Unterputzwasserkasten und einer Spültoilette nach Anspruch 2, **dadurch gekennzeichnet, dass** das Bohrloch am unteren Ende des Führungsrohrs (40) als Einlass und die Öffnung am oberen Ende als Auslass dienen, wobei die Kabel- oder Wasserleitungen durch das untere Ende des Führungsrohrs (40) eingeführt werden und dann in dem Innenraum des Führungsrohrs (40) nach oben verlaufen, und schließlich an den Unterputzwasserkasten angeschlossen werden können.

4. Verbindungsvorrichtung zwischen einem Unterputzwasserkasten und einer Spültoilette nach Anspruch 1, **dadurch gekennzeichnet, dass** das Führungsrohr (40) zweiteilig ausgebildet ist und einen geraden Rohrabschnitt (42) und einen gebogenen Rohrabschnitt (44) aufweist, die miteinander in Steckverbindung stehen.

5. Verbindungsvorrichtung zwischen einem Unterputzwasserkasten und einer Spültoilette nach Anspruch 1, **dadurch gekennzeichnet, dass** das Führungsrohr (40) mit dem Verstärkungssteg (16) fest verbunden ist.

6. Verbindungsvorrichtung zwischen einem Unterputzwasserkasten und einer Spültoilette nach Anspruch 1, **dadurch gekennzeichnet, dass** der Abstand zwischen dem unteren Ende des Führungsrohrs (40) und der Mittelachse (A) maximal 190 mm beträgt.

7. Verbindungsvorrichtung zwischen einem Unterputzwasserkasten und einer Spültoilette nach Anspruch 1 oder 6, mit einer eingebauten Spültoilette, **dadurch gekennzeichnet, dass** die Höhe des unteren Endes des Führungsrohrs (40) niedriger ist als die Höhe der Unterseite der am Befestigungsrahmen (10) montierten Spültoilette.

## Claims

1. Connection device between a flush-mounted cistern and a water closet, having:
a fastening frame (10) having two vertically disposed columns (12) that are disposed on the left and the right; an assembly plate (14) for horizontally connecting the left and the right column (12), wherein assembly bores for assembling the water closet are provided on the assembly plate (14);
a flushing pipe (20) for connecting the flush-mounted cistern to a flushing line of the water closet;
a wastewater pipe (30) for connecting to a wastewater line of the water closet, wherein an entry opening of the wastewater pipe (30) is located below the assembly plate (14) ;
a guide tube (40) which is designed as a hollow tube, the interior space thereof being used for the installation of cables or water lines;
wherein the upper end of the guide tube (40) communicates with the flush-mounted cistern;
wherein the lower end of the guide tube (40) is disposed so as to deviate from the central axis (A) by which the fastening frame (10) is divided into a left half and a right half;
wherein the guide tube (40) is disposed behind the assembly plate (14);
wherein the fastening frame (10) furthermore has a reinforcement web (16) by way of which the left and the right column (12) are horizontally connected to one another, wherein the reinforcement web (16) is disposed below the entry opening of the wastewater pipe (30);
wherein the guide tube (40) is forked at the bottom so as to form two lower ends; and
wherein the guide tube (40) is bent forwards close to its lower end, so that the lower end face is directed towards the front,
**characterized**
**in that** the lower end of the guide tube (40) is disposed below the entry opening of the wastewater pipe (30); and in that the portion of the guide tube (40) that is bent forwards is locked in place below the reinforcement web (16) .

2. Connection device between a flush-mounted cistern and a water closet according to Claim 1, **characterized in that** the upper end of the guide tube (40) is designed to be open and forms an opening, and **in that** the lower end is designed to be closed and is drilled when installing cables or water lines.

3. Connection device between a flush-mounted cistern and a water closet according to Claim 2, **characterized in that** the drilled hole at the lower end of the guide tube (40) serves as an inlet, and the opening at the upper end serves as an outlet, wherein the cables or water lines are introduced through the lower end of the guide tube (40) and then run upwards in the interior space of the guide tube (40), and can finally be connected to the flush-mounted cistern.

4. Connection device between a flush-mounted cistern and a water closet according to Claim 1, **characterized in that** the guide tube (40) is formed in two parts and has a straight tubular portion (42) and a curved tubular portion (44) which are connected to one another by a push-fit.

5. Connection device between a flush-mounted cistern and a water closet according to Claim 1, **characterized in that** the guide tube (40) is fixedly connected to the reinforcement web (16).

6. Connection device between a flush-mounted cistern and a water closet according to Claim 1, **characterized in that** the spacing between the lower end of the guide tube (40) and the central axis (A) is at most 190 mm.

7. Connection device between a flush-mounted cistern and a water closet according to Claim 1 or 6, having an installed water closet, **characterized in that** the height of the lower end of the guide tube (40) is lower than the height of the lower side of the water closet assembled on the fastening frame (10).

## Revendications

1. Dispositif de raccordement entre un réservoir d'eau encastré et une toilette à chasse d'eau, comprenant :
un bâti de fixation (10), présentant deux colonnes (12) agencées verticalement, qui sont agencées à gauche et à droite ;
une plaque de montage (14) pour relier horizontalement les colonnes gauche et droite (12), des trous de montage étant prévus sur la plaque de montage (14) pour un montage une toilette à chasse d'eau ;
un tuyau de chasse (20) pour relier le réservoir d'eau encastré à une conduite de chasse de la toilette à chasse d'eau ;
un tuyau d'évacuation (30) destiné à être raccordé à une conduite d'évacuation des eaux usées de la toilette à chasse d'eau, une ouverture d'entrée du tuyau d'évacuation (30) se trouvant en dessous de la plaque de montage (14),
un tube de guidage (40), qui est conçu sous la forme d'un tube creux et dont l'espace intérieur est utilisé pour l'installation de conduites de câbles ou d'eau,
l'extrémité supérieure du tube de guidage (40) communiquant avec le réservoir d'eau encastré,
l'extrémité inférieure du tube de guidage (40) étant agencée en s'écartant de l'axe central (A) par lequel le bâti de fixation (10) est divisé en deux, à gauche et à droite,
le tube de guidage (40) étant agencé derrière la plaque de montage (14),
le bâti de fixation (10) comprenant en outre une barrette de renforcement (16) avec laquelle les colonnes gauche et droite (12) sont reliées horizontalement l'une à l'autre, la barrette de renforcement (16) étant agencée en dessous de l'ouverture d'entrée du tuyau d'évacuation (30),
le tube de guidage (40) étant bifurqué vers le bas pour former deux extrémités inférieures, et
le tube de guidage (40) étant plié vers l'avant près de son extrémité inférieure, de sorte que la face d'extrémité inférieure soit dirigée vers l'avant,
**caractérisé**
**en ce que** l'extrémité inférieure du tube de guidage (40) est située en dessous de l'ouverture d'entrée du tuyau d'évacuation (30), et
**en ce que** la partie du tube de guidage (40) recourbée vers l'avant est engagée en dessous de la barrette de renforcement (16).

2. Dispositif de raccordement entre un réservoir d'eau encastré et une toilette à chasse d'eau selon la revendication 1, **caractérisé en ce que** l'extrémité supérieure du tube de guidage (40) est réalisée ouverte et forme une ouverture, et **en ce que** l'extrémité inférieure est réalisée fermée et est percée lors de l'installation de conduites de câbles ou d'eau.

3. Dispositif de raccordement entre un réservoir d'eau encastré et une toilette à chasse d'eau selon la revendication 2, **caractérisé en ce que** le trou percé à l'extrémité inférieure du tube de guidage (40) sert d'entrée et l'ouverture à l'extrémité supérieure sert de sortie, les conduites de câbles ou d'eau étant introduites par l'extrémité inférieure du tube de guidage (40) et s'étendant ensuite vers le haut dans l'espace intérieur du tube de guidage (40), et étant aptes à finalement être raccordées au réservoir d'eau encastré.

4. Dispositif de raccordement entre un réservoir d'eau encastré et une toilette à chasse d'eau selon la revendication 1, **caractérisé en ce que** le tube de guidage (40) est réalisé en deux parties et présente une portion de tube droite (42) et une portion de tube coudée (44) qui sont en liaison par emboîtement.

5. Dispositif de raccordement entre un réservoir d'eau encastré et une toilette à chasse d'eau selon la revendication 1, **caractérisé en ce que** le tube de guidage (40) est relié de manière fixe à la barrette de renforcement (16).

6. Dispositif de raccordement entre un réservoir d'eau encastré et une toilette à chasse d'eau selon la revendication 1, **caractérisé en ce que** la distance entre l'extrémité inférieure du tube de guidage (40) et l'axe central (A) est de 190 mm maximum.

7. Dispositif de raccordement entre un réservoir d'eau encastré et une toilette à chasse d'eau selon la revendication 1 ou la revendication 6, avec une toilette à chasse d'eau intégrée,
**caractérisé en ce que** la hauteur de l'extrémité inférieure du tube de guidage (40) est inférieure à la hauteur de la face inférieure d'une toilette à chasse d'eau montée sur le bâti de fixation (10).
